# EUROPÄISCHE PATENTSCHRIFT

(11) **EP 0 991 885 B1**
(45) Veröffentlichungstag und Bekanntmachung des Hinweises auf die Patenterteilung: **11.09.2002**
(21) Anmeldenummer: 98938616.4
(22) Anmeldetag: 19.06.1998
(51) Int. Cl.: F16K 1/22, F02D 9/10

(54) **DROSSELKLAPPENSTUTZEN**
THROTTLE VALVE CASE
CARTER DE PAPILLON

(30) Priorität: 04.07.1997 DE 19728564
(43) Veröffentlichungstag der Anmeldung: 12.04.2000
(73) Patentinhaber: Siemens Aktiengesellschaft, 80333 München (DE)
(72) Erfinder: JUNG, Eckhard, D-35510 Butzbach (DE)
(86) Internationale Anmeldenummer: EP9803753
(87) Internationale Veröffentlichungsnummer: WO99001686

(56) Entgegenhaltungen:
- DE-A- 2 045 639
- DE-A- 3 244 103
- DE-A- 4 319 015
- FR-A- 2 234 497
- FR-A- 2 616 874
- US-A- 3 753 549
- US-A- 5 315 975

## Beschreibung

Die Erfindung betrifft einen Drosselklappenstutzen gemäß den Merkmalen des Oberbegriffes des Patentanspruches 1.

Eine solche Vorrichtung ist aus dem US 5,315,975 bekannt.

Aus der DE 32 44 103 A1 ist beispielsweise ein Drosselklappenstutzen mit einem rohrartigen Gehäuse bekannt, wobei das Gehäuse einen durch eine im wesentlichen kreiszylindrische Innenwand begrenzten Gesamt-Strömungsquerschnitt aufweist. Bei Drehung der in dem Gehäuse gelagerten Klappe steigt mit zunehmender Drehung von einer Minimalstellung in Richtung einer Maximalstellung die Durchflußmasse stark an.

Aus der DE 43 19 015 A1 ist ebenfalls eine Vorrichtung zur Steuerung der Durchflußmasse bekannt, bei der in vorgebbaren Bereichen die Kennlinie anpaßbar ist.

Nachteil dieser Vorrichtungen ist aber, daß es mit zunehmender Öffnung der Klappe zu einer zu hohen Steigung der Durchflußmasse kommt. Dadurch stellt sich über den Arbeitsbereich der Klappe betrachtet eine stetige Zunahme der Durchflußmasse ein, was von Nachteil ist, da die Zunahme der Durchflußmasse mit zunehmender Öffnung der Klappe zu groß wird. Insbesondere bei Brennkraftmaschinen in Fahrzeugen, bei denen die Leistung über die Stellung der Drosselklappe gesteuert wird, ist kein feinfühliges Steuern der Leistung möglich, wenn die Luftmasse bei weiter zunehmender Öffnung der Drosselklappe zu stark ansteigt.

Der Erfindung liegt daher die Aufgabe zugrunde, einen Drosselklappenstutzen bereitzustellen, mit dem die eingangs geschilderten Nachteile vermieden werden und mit der eine feinfühlige Steuerung oder Regelung eines Prozesses, der mittels der Einstellung der Klappe veränderbar ist, zu realisieren.

Diese Aufgabe ist durch die Merkmale des Patentanspruches 1 gelöst.

Durch die Ausgestaltung des Gehäuses und/oder der Klappe, daß über den Bewegungsbereich (Arbeitsbereich) der Klappe ein sich nur schwach ändernder Volumendurchsatz, insbesondere ein schwach steigender Volumendurchsatz, erreichbar ist, ist der Vorteil gegeben, daß mit zunehmendem Arbeitsbereich der Klappe (Öffnung der Klappe) der von der Stellung der Klappe beeinflußte Prozeß nur geringfügig beeinflußt wird und damit aufgrund der Stellung der Klappe eine feinfühlige Steuerung und/oder Regelung des Prozesses ermöglicht wird. So ist in einer besonderen Ausgestaltung der Erfindung vorgesehen, daß sich zumindest über einen wesentlichen Teil des Arbeitsbereiches der Klappe, der 50% oder mehr des gesamten Arbeitsbereiches beträgt, ein sich nur schwach ändernder Volumendurchsatz von bis zu 5% der gesamten Durchflußmasse ändert. Über diesen wesentlichen Teil des Arbeitsbereiches kann die Durchflußmasse steigen oder abnehmen.

Ein bevorzugtes Anwendungsgebiet der Erfindung ist auf dem Gebiet der Leistungssteuerung von Brennkraftmaschinen zu sehen. Denkbar sind darüber hinaus aber auch weitere Anwendungen, bei denen Klappen in einem rohrartigen Gehäuse verwendet werden, so beispielsweise zur Regelung des Durchflusses von Flüssigkeiten oder auch die Regelung des Luftdurchsatzes bei Klimaanlagen, bei denen Frisch- oder Umluft, aber auch kalte beziehungsweise erwärmte Luft einem Fahrgastraum eines Fahrzeuges zugeführt werden soll.

Im weiteren wird die Erfindung anhand eines Drosselklappenstutzens beschrieben. Zur Lösung der Aufgabe ist erfindungsgemäß vorgesehen, daß sich in Strömungsrichtung stromaufwärts und stromabwärts, ausgehend von einer Minimalstellung der Drosselklappe, ein gerader Zylinderabschnitt erstreckt und sich dem geraden Zylinderabschnitt ein kugelförmiger Abschnitt mit einem Mittelpunkt, der weitestgehend mit dem Mittelpunkt der Drosselklappenwelle zusammenfällt, und mit einem Radius, der größer ist als der Bewegungsradius der Drosselklappe, anschließt. Dies hat den Vorteil, daß mit dieser Ausgestaltung eine Kennlinie erzielbar ist, bei der, ausgehend von der Minimalstellung, insbesondere der Schließstellung, der Drosselklappe in einem geringen Teilbereich des Arbeitsbereiches eine starke Steigung der durchgesetzten Luftmasse erzielbar ist, wobei sich daran anschließend mit zunehmendem Arbeitsbereich (Öffnung) der Klappe die Luftmasse nur noch gering ändert (schwach ansteigt). Damit ist realisiert, daß der Brennkraftmaschine, in dem von der Brennkraftmaschine ein großes Luftvolumen angefordert wird, dieses zur Verfügung gestellt werden kann und in dem sich anschließenden Bereich aufgrund der nur schwach ansteigenden Luftmasse bei weiterer Öffnung der Drosselklappe eine feinfühlige Regelung der Leistung der Brennkraftmaschine ermöglicht wird.

Weitere konstruktive Ausgestaltungen eines erfindungsgemäßen Drosselklappenstutzens sind im folgenden erläutert und anhand der Figuren beschrieben.

Es zeigen:
- Figur 1:: ein erfindungsgemäß ausgestatteter Drosselklappenstutzen,
- Figur 2:: eine Übersicht über Kennlinien verschiedener Drosselklappenstutzen.
- Figur 3:: ein zylindrisch ausgestalteter Drosselklappenstutzen nach dem Stand der Technik und
- Figur 4:: ein kalottenförmig ausgestalteter Drosselklappenstutzen, ebenfalls nach dem Stand der Technik.

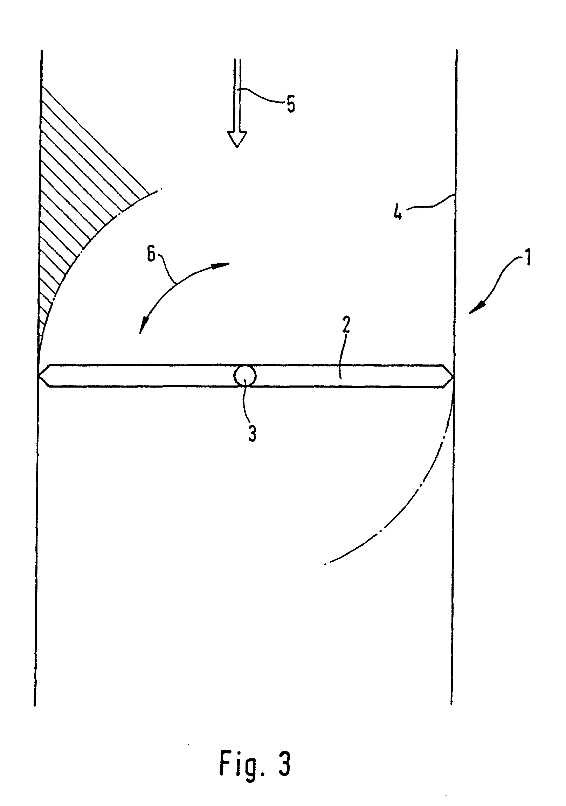

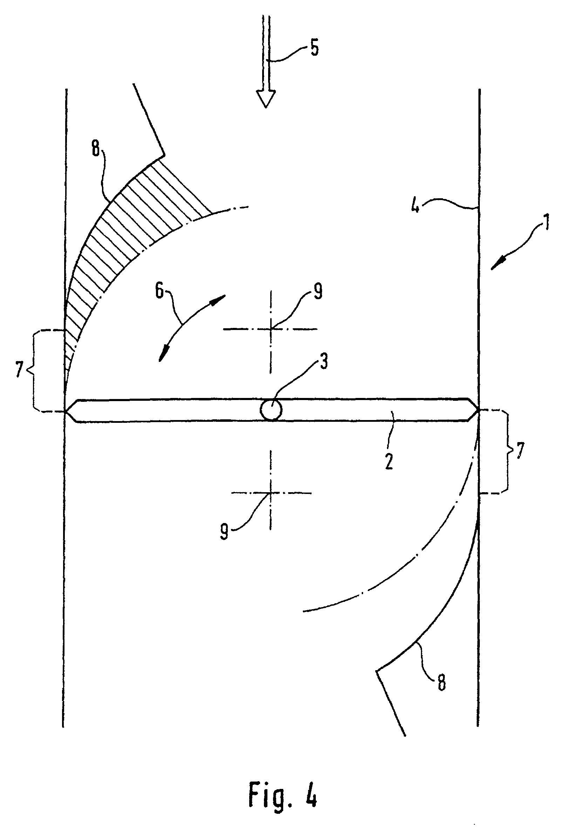

Zur Verdeutlichung der Erfindung wird diese im Hinblick auf den Stand der Technik beschrieben, wobei dieser schematisch in den Figuren 3 und 4, auf die zunächst Bezug genommen wird, wiedergegeben ist.

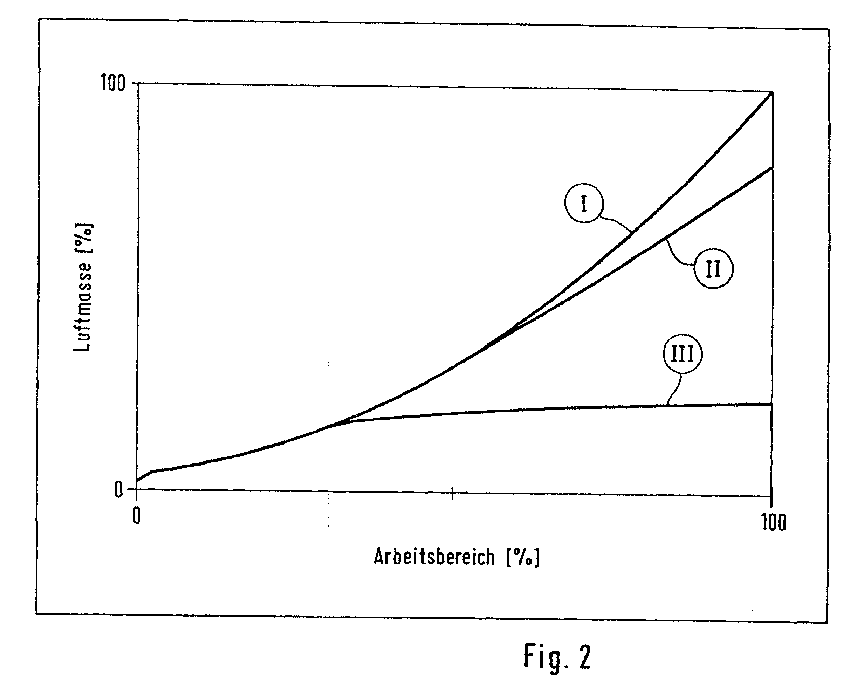

Figur 3 zeigt einen Drosselklappenstutzen 1, der aus der DE 32 44 103 A1 bekannt ist. In diesem geradzylindrischen Drosselklappenstutzen 1 ist eine Drosselklappe 2 drehbar mittels einer Drosselklappenwelle 3 gelagert. Die Drosselklappe 2 ist in Figur 3 in ihrer Minimalstellung (Schließstellung) gezeigt, wobei die Enden (der Außenumfang) der Drosselklappe 2 an einer Innenwand 4 des Drosselklappenstutzens 1 anliegen. Mit der Bezugsziffer 5 ist eine Strömungsrichtung der durchströmenden Luft bezeichnet und mit der Bezugsziffer 6 die Drehrichtung der Drosselklappe 2 von ihrer Schließstellung in eine Maximalstellung, die vorzugsweise einer 90°-Drehung aus der Schließstellung entspricht, und umgekehrt. Die Bewegungsbahn der Drosselklappe 2 ist strichpunktiert dargestellt, so daß mit zunehmender Drehung der Drosselklappe 2 aus ihrer Schließstellung in Richtung der Maximalstellung der Volumendurchsatz (die Durchflußmasse) in nachteiliger Weise überproportional zunimmt, was durch den schraffierten Bereich in Figur 3 angedeutet ist. Daraus ergibt sich die in Figur 2 dargestellte Kennlinie I.

In Figur 4 ist eine schon gegenüber dem in Figur 3 gezeigten Drosselklappenstutzen 1 verbesserte Konstruktion ersichtlich. Diese in Figur 4 gezeigte Konstruktion entspricht im wesentlichen dem aus der DE 43 19 015 A1 beziehungsweise aus dem US 5,315,975 bekannten Drosselklappenstutzen. Bei diesem in Figur 4 gezeigten Drosselklappenstutzen 1 schließt sich stromaufwärts beziehungsweise stromabwärts in Strömungsrichtung 5 betrachtet und ausgehend von der Schließstellung der Drosselklappe 2 ein gerader Zylinderabschnitt 7 an, wobei sich dem geraden Zylinderabschnitt 7 ein kugelförmiger Abschnitt 8 anschließt. Der gerade Zylinderabschnitt 7 und der kugelförmige Abschnitt 8 bilden damit die Innenwand 4 des Drosselklappenstutzens 1. Auch hier ist die Bewegungsbahn wieder strichpunktiert dargestellt, wobei der Radius dieser Bewegungsbahn der Drosselklappe 2 und der Radius des kugelförmigen Abschnittes 8 gleich groß gewählt sind; der Mittelpunkt des kugelförmigen Abschnittes 8 ist jedoch auf Höhe des geraden Zylinderabschnittes 7 angeordnet. Das heißt, daß der Mittelpunkt der Drosselklappenwelle 3 und der Mittelpunkt des kugelförmigen Abschnittes, wobei der Mittelpunkt mit der Bezugsziffer 9 bezeichnet ist, voneinander unterschiedlich sind. Somit läßt sich mit dieser Konstruktion ein Volumendurchsatz erzielen, der in Figur 4 wieder schraffiert dargestellt und in Figur 2 als Kennlinie II bezeichnet ist und ebenfalls hinsichtlich der Forderung nicht optimal ist.

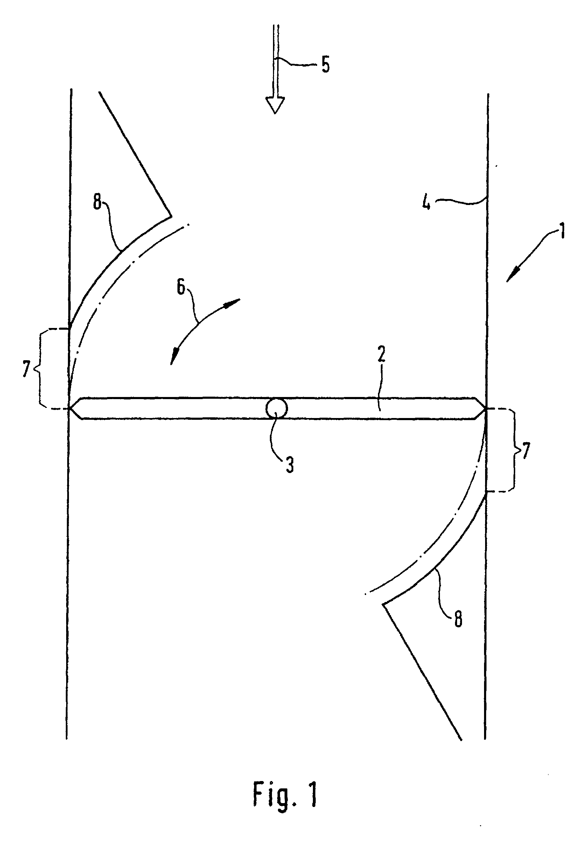

Die erfindungsgemäß vorgesehene Ausgestaltung des Drosselklappenstutzens 1 ist nun in Figur 1 gezeigt, wobei wiederum ein gerader Zylinderabschnitt 7 vorgesehen ist, dem sich ein kugelförmiger Abschnitt 8 anschließt. Wesentlich für die Erfindung ist hierbei, daß der Mittelpunkt der Bewegungsbahn der Drosselklappe 2 und der Mittelpunkt des kugelförmigen Abschnittes 8 zusammenfallen, wobei der Radius des kugelförmigen Abschnittes 8 größer gewählt ist als der Radius der Bewegungsbahn der Drosselklappe 2. Insbesondere fallen der Schnittpunkt des kugelförmigen Abschnittes 8 und das der Schließstellung der Drosselklappe 2 abgewandte Ende des geraden Zylinderabschnittes 7 zusammen, wobei weiterhin von Bedeutung ist, daß der Radius des kugelförmigen Abschnittes 8 größer ist als der Radius des Drosselklappenstutzens 1. Aufgrund dieser geometrischen Ausgestaltung des Drosselklappenstutzens 1 ergibt sich ein in einem wesentlichen Arbeitsbereich der Drosselklappe 2 linearer Verlauf des Volumendurchsatzes, der anhand der Kennlinie III in Figur 2 dargestellt ist. Zur Beeinflussung der Kennlinie III ist es denkbar, daß der Mittelpunkt des kugelförmigen Abschnittes 8 nicht mit dem Mittelpunkt der Drosselklappe 2 (also der Drosselklappenwelle 3) zusammenfällt, sondern im unmittelbaren Nahbereich um diesen herum vorgesehen wird. Die gegenständliche Ausgestaltung des Drosselklappenstutzens sieht vor, daß der gerade Zylinderabschnitt 7 ein kreisförmiges Profil und der kugelförmige Abschnitt 8 ein Kugelprofil aufweist, die sich stromaufwärts beziehungsweise stromabwärts in Strömungsrichtung 5 hintereinander anschließen. Sind somit der Mittelpunkt des kreisförmigen Profiles (Zylinder) und des Kugelprofiles gleich, entsteht die Kugelzonengeometrie des Drosselklappenstutzens 1 aus der Verschneidung einer Kugel und einem Zylinder.

Eine vorteilhafte Ausgestaltung der Erfindung sieht vor, daß der Drosselklappenstutzen 1 aus Kunststoff hergestellt ist, wobei auch die Herstellung aus anderen Materialien wie beispielsweise Druckguß oder dergleichen denkbar ist. Die Herstellung aus Kunststoff hat den besonderen Vorteil, daß eine anschließende Bearbeitung (mit Ausnahme beispielsweise der Beseitigung von herstellungsbedingten Überständen) vermieden werden kann.

### Bezugszeichenliste

- 1.: Drosselklappenstutzen
- 2.: Drosselklappe
- 3.: Drosselklappenwelle
- 4.: Innenwand
- 5.: Strömungsrichtung
- 6.: Drehrichtung
- 7.: gerader Zylinderabschnitt
- 8.: kugelförmiger Abschnitt
- 9.: Mittelpunkt

## Patentansprüche

1. Drosselklappenstutzen (1) mit einer in dem Drosselklappenstutzen (1) zwischen einer Minimalstellung, insbesondere einer Schließstellung, und einer Maximalstellung um eine Drosselklappenwelle (3) drehbar gelagerten Drosselklappe (2), wobei sich in Strömungsrichtung (5) stromaufwärts und stromabwärts, ausgehend von der Minimalstellung der Drosselklappe (2), ein gerader Zylinderabschnitt (7) erstreckt, **dadurch gekennzeichnet, daß** sich dem geraden Zylinderabschnitt (7) ein kugelförmiger Abschnitt (8) mit einem Mittelpunkt, der weitestgehend mit dem Mittelpunkt der Drosselklappenwelle (3) zusammenfällt, und mit einem Radius, der größer ist als der Bewegungsradius der Drosselklappe (2), anschließt.

2. Drosselklappenstutzen (1) nach Anspruch 1, **dadurch gekennzeichnet, daß** der Mittelpunkt des geraden Zylinderabschnittes (7) und der der Drosselklappenwelle (3) identisch sind.

3. Drosselklappenstutzen (1) nach Anspruch 1 oder 2, **dadurch gekennzeichnet, daß** der Mittelpunkt des kugelförmigen Abschnittes (8) und der der Drosselklappenwelle (3) identisch sind.

4. Drosselklappenstutzen (1) nach Anspruch 1, 2 oder 3, **dadurch gekennzeichnet, daß** der gerade Zylinderabschnitt (7) ein kreisförmiges Profil aufweist.

5. Drosselklappenstutzen (1) nach einem der vorhergehenden Ansprüche, **dadurch gekennzeichnet, daß** der kugelförmige Abschnitt (8) ein Kugelprofil aufweist.

6. Drosselklappenstutzen (1) nach einem der vorhergehenden Ansprüche, **dadurch gekennzeichnet, daß** der Drosselklappenstutzen (1) aus Kunststoff hergestellt ist.

## Claims

1. Throttle body (1) with a throttle flap (2) which is mounted in such a way as to be rotatable in the throttle body (1) about a throttle-flap shaft (3), between a minimum position, in particular a closed position, and a maximum position, there extending, upstream and downstream in the direction of flow (5) and starting from the minimum position of the throttle flap (2), a right cylindrical portion (7), **characterized in that** adjoining the right cylindrical portion (7) there is a spherical portion (8) with a centre which coincides substantially with the center of the throttle-flap shaft (3) and with a radius which is a greater tha nthe radius of motion of the throttle flap (2).

2. Throttle body (1) according to Claim 1, **characterized in that** the centre of the right cylindrical portion (7) and that of the throttle-flap shaft (3) are identical.

3. Throttle body (1) according to Claim 1 or 2, **characterized in that** the centre of the spherical portion (8) and that of the throttle-flap shaft (3) are identical.

4. Throttle body (1) according to Claim 1, 2 or 3, **characterized in that** the right cylindrical portion (7) has a circular profile.

5. Throttle body (1) according to one of the preceding claims, **characterized in that** the spherical portion (8) has a spherical profile.

6. Throttle body (1) according to one of the preceding claims, **characterized in that** the throttle body (1) is produced from plastic.

## Revendications

1. Tubulure de papillon de commande (1) comportant un papillon de commande (2) monté dans la tubulure de papillon de commande (1) et tournant autour d'un arbre de papillon de commande (3), entre une position minimale, en particulier une position de fermeture, et une position maximale, une partie cylindrique droite (7) s'étendant, dans le sens de l'écoulement (5), vers l'aval et vers l'amont, à partir de la position minimale du papillon de commande (2),
**caractérisée en ce qu'**à la partie cylindrique droite (7) se raccorde une partie de forme sphérique (8) comportant un centre, qui coïncide le plus largement avec le centre de l'arbre du papillon de commande (3), et comportant un rayon qui est plus grand que le rayon de déplacement du papillon de commande (2).

2. Tubulure de papillon de commande (1) suivant la revendication 1, **caractérisée en ce que** le centre de la partie cylindrique droite (7) et celui de l'arbre du papillon de commande sont identiques.

3. Tubulure de papillon de commande (1) suivant la revendication 1 ou la revendication 2, **caractérisée en ce que** le centre de la partie de forme sphérique (8) et celui de l'arbre du papillon de commande sont identiques.

4. Tubulure de papillon de commande (1) suivant la revendication 1, 2 ou 3, **caractérisée en ce que** la partie cylindrique droite (7) présente un profil circulaire.

5. Tubulure de papillon de commande (1) suivant l'une des revendications précédentes, **caractérisée en ce que** la partie de forme sphérique (8) présente un profil sphérique.

6. Tubulure de papillon de commande (1) suivant l'une des revendications précédentes, **caractérisée en ce que** la tubulure de papillon de commande (1) est fabriquée en matière plastique.
